# EUROPÄISCHE PATENTSCHRIFT

(11) **EP 3 186 303 B1**
(45) Veröffentlichungstag und Bekanntmachung des Hinweises auf die Patenterteilung: **28.04.2021**
(21) Anmeldenummer: 15771032.8
(22) Anmeldetag: 27.08.2015
(51) Int. Cl.: C08J 7/02, C08J 7/04, B05D 1/00, B05D 5/00, B05D 7/02, B05D 7/16, B29C 67/00, C09D 133/06

(54) **VERFAHREN ZUM IMPRÄGNIEREN VON FORMTEILEN**
METHOD FOR IMPREGNATING MOULDED ARTICLES
PROCÉDÉ D'IMPRÉGNATION DE PIÈCES MOULÉES

(30) Priorität: 29.08.2014 DE 102014112509
(43) Veröffentlichungstag der Anmeldung: 05.07.2017
(73) Patentinhaber: DyeMansion GmbH, 82152 Planegg (DE)
(72) Erfinder: EWALD, Felix, 78166 Donaueschingen (DE); KRAMER, Philipp, 81243 München (DE)
(74) Vertreter: 2s-ip Schramm Schneider Bertagnoll Patent- und Rechtsanwälte Part mbB
(86) Internationale Anmeldenummer: PCT/EP2015/069707
(87) Internationale Veröffentlichungsnummer: WO 2016/030490

(56) Entgegenhaltungen:
- WO-A1-03/089218
- WO-A1-2011/089208
- WO-A1-2015/108574
- DE-A1- 4 115 588
- DE-A1-102014 102 137
- US-A- 3 803 111
- US-A- 2001 043 990

## Beschreibung

### Gebiet der Erfindung

Die Erfindung betrifft ein Verfahren zum Imprägnieren von in einem 3D-Druckverfahren hergestellten Formteilen, die Verwendung eines Imprägniermittels zum Imprägnieren von in einem 3D-Druckverfahren hergestellten Formteilen, sowie ein in einem 3D-Druckverfahren hergestelltes Formteil, das zumindest teilweise imprägniert ist.

### Stand der Technik und Hintergrund der Erfindung

Es ist bekannt, Kunststoffgegenstände bzw. Kunststoffformteile in einem generativen bzw. additiven Fertigungsverfahren, beispielsweise in einem Sinterverfahren, herzustellen, wobei die Gegenstände schichtweise aufgebaut werden. Die generativen bzw. additiven Fertigungsverfahren werden nachfolgend allgemein als 3D-Druckverfahren bzw. Druckverfahren bezeichnet. Als Ausgangsmaterial für die in einem 3D-Druckverfahren herzustellenden Gegenstände bzw. Formteile können etwa Polyamide oder thermoplastisches Polyurethan verwendet werden.

Die Verwendung derartiger Kunststoffe bzw. die Herstellung von Kunststoffgegenständen in einem 3D-Druckverfahren haben den Nachteil, dass die Oberfläche der Gegenstände porös ist und damit einerseits einem erhöhten Verschleiß unterliegt und andererseits durch die poröse Oberflächenstruktur Schmutz verhältnismäßig leicht an der Oberfläche haften bleibt. Die Ästhetik des Gegenstandes kann so erheblich beeinträchtigt werden. Darüber hinaus kann die poröse Oberfläche der Gegenstände die Haptik negativ beeinflussen. Ferner können die Gegenstände je nach verwendetem Druckmaterial Wasser bzw. Feuchtigkeit aufnehmen, was die Struktur und/oder die Festigkeit bzw. Stabilität der Gegenstände negativ beeinflussen kann.

Um die poröse Oberfläche von solchen Gegenständen zumindest teilweise zu beseitigen, ist es im Stand der Technik bekannt, die Oberfläche der Kunststoffgegenstände zu schleifen und/oder zu polieren. Damit kann die Oberfläche der Kunststoffgegenstände zwar glatter ausgestaltet werden. Allerdings ist ein weitgehendes Beseitigen der Poren nur mit erheblichem Aufwand möglich, sodass in der Regel auch nach dem Polieren nicht gewährleistet ist, dass kein Schmutz an der Oberfläche haften bleibt.

Ein Polieren der Oberfläche ist allerdings nicht in jedem Fall möglich. Weil beim Polieren Material von der Oberfläche abgetragen wird, kann die Geometrie des Gegenstandes geändert werden, was in manchen Fällen nicht erwünscht ist.

Zudem kann selbst durch ein Polieren der Oberfläche nicht gewährleistet werden, dass diese fluidabweisend, insbesondere wasserabweisend, sowie wasserdicht ist. Je nach verwendetem Material bei der Herstellung solcher Kunststoffgegenstände ist es jedoch unbedingt notwendig, dass die Oberfläche wasserabweisend bzw. wasserdicht ist.

Aus der US 2001/0043990 A1 ist ein Verfahren zur Oberflächenbehandlung von Kunststoffteilen bekannt, die in einem 3D-Druckverfahren hergestellt werden. Das Verfahren weist im wesentlichen vier Schritte auf, nämlich a) beseitigen der Poren an der Oberfläche des Kunststoffteils, b) glätten der Oberfläche des Kunststoffteils indem ein Epoxidharz auf die Oberfläche aufgebracht wird, c) abschleifen der mit dem Epoxidharz behandelten Oberfläche, und d) lackieren der Oberfläche des Kunststoffteils mit einem Klarlack.

Aus der DE 41 15 588 A1 ist ein Verfahren zum Grundieren von Kunststoffsubstraten, etwa aus Polyamid, bekannt. Die Grundierung besteht aus verschiedenen Bindemittel, etwa Polyacrylate, bis zu 70 Gew.-% organischer Lösungsmittel, etwa Butylacetat, und Additiven.

Die WO 03/089218 A1 beschäftigt sich mit dem Glätten von Oberflächen von Kunststoffgegenständen, indem die Kunststoffgegenstände in ein Lösungsmittel gelegt werden, das die Oberfläche leicht anlöst, wodurch ein Glätten der Oberfläche bewirkt wird.

Die nachveröffentlichte DE 10 2014 102 137 A1 beschäftigt sich mit dem Färben von Oberflächen von Kunststoffgegenständen, die in einem 3D-Druckverfahren hergestellt wurden, wobei die gefärbten Kunststoffgegenstände imprägniert werden können.

Die nachveröffentlichte WO 2015/108574 A1 beschäftigt sich mit dem Glätten der Oberfläche von in einem 3D-Druckverfahren hergestellten Kunststoffgegenständen mit einem Fluid, etwa einem Monomer oder einem Polymer.

Die WO 2011/089208 A1 beschäftigt sich mit dem Veredeln von in einem 3D-Druckverfahren hergestellten Formteilen und erwähnt hierbei auch, dass die Formteile mit einer öl- oder fetthaltigen Imprägnierung imprägniert werden können.

### Aufgabe der Erfindung

Aufgabe der vorliegenden Erfindung ist es daher, Lösungen bereitzustellen, mit denen ein einfaches und insbesondere sicheres Versiegeln bzw. Imprägnieren von in einem 3D-Druckverfahren, insbesondere von in einem pulverbasierten Fertigungs- bzw. Druckverfahren hergestellten Formteilen ermöglicht wird, sodass die Oberfläche der Formteile einerseits eine vorteilhafte Haptik aufweist und andererseits schmutzabweisend, wasserabweisend und weitgehend wasserdicht ist.

### Erfindungsgemäße Lösung

Diese Aufgabe wird erfindungsgemäß durch ein Verfahren zum Imprägnieren von in einem 3D-Druckverfahren hergestellten Formteilen, durch die Verwendung eines Imprägniermittels, sowie durch ein Formteil nach den unabhängigen Ansprüchen gelöst. Vorteilhafte Ausgestaltungen und Weiterbildungen der Erfindung ergeben sich aus den jeweiligen abhängigen Ansprüchen.

Bereitgestellt wird demnach ein Verfahren zum Imprägnieren von in einem 3D-Druckverfahren, insbesondere von in einem pulverbasierten Fertigungs- bzw. Druckverfahren hergestellten Formteilen mit einem flüssigen und/oder spritzfähigen Imprägniermittel, wobei das Imprägniermittel
- 25 bis 95 Gew.-% eines Lösungsmittels oder Lösungsmittelgemisches, wobei das Lösungsmittel oder das Lösungsmittelgemisch ausgewählt ist aus der Gruppe, umfassend Butanol, Butylacetat, Dichlormethan, Methanol, Ester, Vinylchlorid, Toluol, und Kombinationen hiervon, und
- auf 100 Gew.-% ergänzte Anteile eines in dem Lösungsmittel oder Lösungsmittelgemisch auflösbaren Kunststoffes oder Kunststoffgemisches, wobei der Kunststoff oder das Kunststoffgemisch ausgewählt ist aus der Gruppe, umfassend Polyamid, synthetische oder synthetisch hergestellte Harze, Polystyrol, Polymethylmethacrylat, Polycarbonat, Polyethylenterephthalat, Acrylnitril-Butadien-Styrol, und Kombinationen hiervon,
aufweist, jeweils bezogen auf die Gesamtzusammensetzung des Imprägniermittels, und wobei
- das Imprägniermittel auf die zu imprägnierende Oberfläche des Formteilsaufgebracht wird und
- nach dem Aufbringen des Imprägniermittels die imprägnierte Oberfläche getrocknet wird.

Es hat sich herausgestellt, dass das Lösungsmittel-/Kunststoffgemisch (Imprägniermittel) eine besonders gute kapillaraktive Eigenschaft aufweist, sodass aufgrund der Kapillaraktivität das Imprägniermittel in die Poren der porösen Oberfläche der Formteile eindringen kann, sodass sich der Kunststoff bzw. das Kunststoffgemisch des Imprägniermittels nach dem Trocknen bzw. Aushärten in den Poren der porösen Oberfläche verankert, sodass die Oberfläche des Formteils gleichmäßig versiegelt ist und eine weitgehend glatte und porenfreie Oberfläche geschaffen wird. Aufgrund der Verankerung des Kunststoffes bzw. des Kunststoffgemisches des Imprägniermittels in den Poren der Oberfläche wird zudem gewährleistet, dass das Imprägniermittel besonders gut an der Oberfläche haftet und ein Abplatzen des Imprägniermittels von der Oberfläche des Formteils weitgehend verhindert wird.

Es hat sich gezeigt, dass sich das Imprägnierverfahren besonders gut für Formteile eignet, die in einem pulverbasierten Fertigungs- bzw. Druckverfahren hergestellt werden.

In einer Ausgestaltung der Erfindung kann der Anteil des Lösungsmittels oder Lösungsmittelgemisches in dem Imprägniermittel 25 bis 99 Gew.-% betragen.

Je nach Anteil des Kunststoffes bzw. Kunststoffgemisches in dem Imprägniermittel können extrem kleine Poren (bis zu 1 µm Durchmesser) verschlossen werden.

Durch die Verwendung eines in dem Lösungsmittel auflösbaren Kunststoffes bzw. Kunststoffgemisches wird zudem erreicht, dass die mit dem Imprägniermittel behandelte Oberfläche des Formteils schmutzabweisend und wasserabweisend bzw. wasserdicht wird. Die schmutz- bzw. wasserabweisende Eigenschaft der Oberfläche wird im Wesentlichen dadurch erreicht, dass durch das Aufbringen des Imprägniermittels eine besonders glatte Oberfläche erzeugt wird, die ein Anhaften von Schmutz bzw. Wasser an der Oberfläche weitgehend verhindert.

In einer Ausgestaltung der Erfindung kann dem Imprägniermittel 0,05 bis 15 Gew.-% eines Zusatzstoffes, vorzugsweise ausgewählt aus der Gruppe, umfassend Duftstoff, Farbstoff, Polytetrafluorethylen, und Kombinationen hiervon, beigegeben werden.

Damit kann beispielsweise ein unangenehmer Geruch des Lösungsmittels bzw. des Lösungsmittelgemisches in dem Imprägniermittel unterdrückt werden. Durch die Beigabe von Polytetrafluorethylen können Kunststoffgegenstände imprägniert werden, die nach dem Imprägnieren noch bessere Antihaft-Eigenschaften aufweisen, sodass Wasser und/oder Schmutz noch schwerer an der imprägnierten Oberfläche haften bleibt. Durch die Beigabe eines Farbstoffes kann der zu imprägnierenden Oberfläche zusätzlich ein bestimmter Farbton verliehen werden.

Vorteilhaft ist es, wenn die Formteile in einem pulverbasierten Fertigungs- bzw. Druckverfahren gedruckt werden aus einem Material ausgewählt aus der Gruppe, umfassend Polyamid, insbesondere Polyamid 11 und Polyamid 12, thermoplastisches Polyurethan, aluminiumgefülltes Polyamid, insbesondere aluminiumgefülltes Polyamid 12, glasgefülltes Polyamid, carbonverstärktes Polyamid, Sand, Gips, Metall, Verbundwerkstoff, und Kombinationen hiervon.

Besonders vorteilhaft ist es hierbei, wenn pulverförmige oder granulatförmige Materialien zum Drucken der Formteile verwendet werden.

Das 3D-Druckverfahren kann pulverbasierte Druckverfahren umfassen, insbesondere Selective Lasersintering (SLS), Selective Heat Sintering, und Inkjet 3D-Printing.

Vorteilhaft ist es, wenn zum Aufbringen des Imprägniermittels auf die zu imprägnierende Oberfläche des Formteils
- das Formteil für eine Dauer zwischen wenigen Millisekunden und 120 Minuten, vorzugsweise zwischen 5 Minuten und 60 Minuten, besonders bevorzugt zwischen 10 Minuten und 30 Minuten in das Imprägniermittel getaucht wird, oder
- das Imprägniermittel auf die zu imprägnierende Oberfläche des Formteils aufgesprüht oder aufgepinselt wird.

Vorteilhaft ist es zudem, wenn das Aufbringen des Imprägniermittels auf die zu imprägnierende Oberfläche des Formteils bei einer Temperatur des Imprägniermittels zwischen 5°C und 50°C, vorzugsweise zwischen 15°C und 30°C, besonders bevorzugt zwischen 20°C und 25°C (Raumtemperatur) erfolgt.

Nach dem Aufbringen des Imprägniermittels und vor dem Trocknen der imprägnierten Oberfläche kann die mit dem Imprägniermittel versehene Oberfläche aufbereitet werden, um eine weitgehend gleichmäßige Verteilung, insbesondere eine gleichmäßige Stärke und/oder Dicke des Imprägniermittels an der Oberfläche zu erhalten.

Damit werden unerwünschte Ansammlungen des Imprägniermittels an der Oberfläche vermieden bzw. verhindert, was zu unerwünschten gehärteten Tropfen des Imprägniermittels an der Oberfläche führen kann und so die Haptik des imprägnierten Formteils negativ beeinflussen kann. Insbesondere wird dadurch vermieden, dass sich das Imprägniermittel in dünnen Spalten und Ecken ansammeln kann. Ein weiterer Vorteil der gleichmäßigen Verteilung bzw. der gleichmäßigen Stärke und/oder Dicke des Imprägniermittels an der Oberfläche liegt darin, dass die imprägnierte Oberfläche gleichmäßig austrocknen kann, sodass die Bildung von Spannungsrissen während des Trocknungsvorganges effektiv vermieden wird.

Als besonders vorteilhaft hat sich herausgestellt, wenn das Aufbereiten der mit dem Imprägniermittel versehenen Oberfläche des Formteils
- mit einer Schleudervorrichtung, die das Formteil aufnimmt und die angepasst ist, dass im Betrieb eine Zentrifugalkraft auf das an der Oberfläche aufgebrachte Imprägniermittel wirkt, oder
- durch Beaufschlagen der mit dem Imprägniermittel versehenen Oberfläche mit Druckluft
durchgeführt wird.

Das Schleudern des imprägnierten Formteils mit der Schleudervorrichtung kann für eine Dauer zwischen 2 Sekunden und 600 Sekunden, vorzugsweise zwischen 5 Sekunden und 300 Sekunden, besonders bevorzugt zwischen 10 Sekunden und 120 Sekunden durchgeführt werden.

Als weiter vorteilhaft hat sich herausgestellt, wenn zum Trocknen der imprägnierten Oberfläche die imprägnierte Oberfläche oder das Formteil erhitzt oder erwärmt wird, um ein Aushärten des auf die Oberfläche des Formteils aufgebrachten Imprägniermittels zu beschleunigen.

In einer Ausgestaltung der Erfindung kann das Aufbringen des Imprägniermittels auf die Oberfläche des Formteils bei Überdruck erfolgen, wobei das Formteil und das Imprägniermittel in ein druckdichtes Behältnis eingebracht werden und das Behältnis mit Überdruck beaufschlagt wird. Dadurch wird ein noch besseres Einbringen des Imprägniermittels in die Poren der Oberfläche gewährleistet.

Vorteilhaft ist es hierbei, wenn vor dem Einbringen des Imprägniermittels in das Behältnis das Behältnis mit dem darin angeordneten Formteil mit Unterdruck (Vakuum) beaufschlagt wird. Das Imprägniermittel wird dann in das unter Unterdruck stehende Behältnis eingebracht und anschließend wird das Behältnis mit Überdruck beaufschlagt.

Damit wird vermieden, dass beim Einbringen des Imprägniermittels in das Behältnis Luft in den Poren eingeschlossen wird, sodass ein noch besseres Eindringen des Imprägniermittels in die Poren der Oberfläche des Formteils gewährleistet ist. Zudem kann sich der in dem Imprägniermittel aufgelöste Kunststoff bzw. Kunststoffgemisch beim Aushärten bzw. Austrocknen des Imprägniermittels noch besser in den Poren der Oberfläche des Formteils verankern.

Nach dem Trocken der Oberfläche des Formteils kann die Oberfläche des Formteils poliert werden, wobei zum Polieren vorzugsweise keramische Polierelemente verwendet werden, wobei das Formteil vorzugsweise in einer Poliereinrichtung, insbesondere Poliertrommel, Rundvibrator, oder Gleitschliffanlage poliert wird, und wobei das Formteil über einer Dauer zwischen 1 Minute und mehrere Tage, vorzugsweise zwischen 15 Minuten und 24 Stunden, besonders bevorzugt zwischen 1 Stunde und 8 Stunden poliert wird. Anstelle der keramischen Polierelemente können auch Streifen und/oder Kugeln (oder anders geformte Formteile) aus Stoff, Leder oder ähnlichen Materialien verwendet werden. Das imprägnierte Formteil kann auch mit einer Poliermaschine, etwa Handpoliergerät poliert werden.

Durch das anschließende Polieren der imprägnierten Oberfläche kann diese noch weiter geglättet werden oder es kann der Oberfläche ein besonderer Glanz verliehen werden.

Des Weiteren wird durch die Erfindung die Verwendung eines Imprägniermittels zum Imprägnieren von in einem 3D-Druckverfahren, insbesondere von in einem pulverbasierten Fertigungs- bzw. Druckverfahren hergestellten Formteilen bereitgestellt, wobei das Imprägniermittel
- 25 bis 99 Gew.-% eines Lösungsmittels oder Lösungsmittelgemisches, wobei das Lösungsmittel oder das Lösungsmittelgemisch ausgewählt ist aus der Gruppe, umfassend Butanol, Butylacetat, Dichlormethan, Methanol, Ester, Vinylchlorid, Toluol, und Kombinationen hiervon, und
- auf 100 Gew.-% ergänzte Anteile eines in dem Lösungsmittel oder Lösungsmittelgemisch auflösbaren Kunststoffes oder Kunststoffgemisches, wobei der Kunststoff oder das Kunststoffgemisch ausgewählt ist aus der Gruppe, umfassend Polyamid, synthetische oder synthetisch hergestellte Harze, Polystyrol, Polymethylmethacrylat, Polycarbonat, Polyethylenterephthalat, Acrylnitril-Butadien-Styrol, und Kombinationen hiervon,
umfasst, jeweils bezogen auf die Gesamtzusammensetzung des Imprägniermittels.

Bei der Verwendung des Imprägniermittels kann dieses 0,05 bis 15 Gew.-% eines Zusatzstoffes, vorzugsweise ausgewählt aus der Gruppe, umfassend Duftstoff, Farbstoff, Polytetrafluorethylen, und Kombinationen hiervon, umfasst.

Das Imprägniermittel kann angepasst sein, dass es bei der Verwendung in einem Tauchverfahren oder in einem Spritzverfahren oder mit einem Pinsel auf die Oberfläche eines Formteils aufgebracht wird.

Bei der Verwendung des Imprägniermittels ist es vorteilhaft, wenn
- das Formteil für eine Dauer zwischen 1 Minute und 120 Minuten, vorzugsweise zwischen 5 Minuten und 60 Minuten, besonders bevorzugt zwischen 10 Minuten und 30 Minuten in das Imprägniermittel getaucht wird, oder
- das Imprägniermittel auf die zu imprägnierende Oberfläche des Formteils aufgesprüht bzw. aufgespritzt oder aufgepinselt wird.

Als vorteilhaft hat sich herausgestellt, wenn bei der Verwendung des Imprägniermittels das Imprägniermittel bei einer Temperatur des Imprägniermittels zwischen 5°C und 50°C, vorzugsweise zwischen 15°C und 30°C, besonders bevorzugt zwischen 20°C und 25°C (Raumtemperatur) auf die zu imprägnierende Oberfläche des Formteils aufgebracht wird.

Bei der Verwendung des Imprägniermittels kann ein Trocknungsschritt vorgesehen sein, um das auf die Oberfläche des Formteils aufgebrachte Imprägniermittel zu trocknen.

Als vorteilhaft hat sich hierbei herausgestellt, wenn zum Trocknen der imprägnierten Oberfläche die imprägnierte Oberfläche oder das Formteil erhitzt oder erwärmt wird, um ein Aushärten bzw. Trocknen des auf die Oberfläche des Formteils aufgebrachten Imprägniermittels zu beschleunigen.

Vorteilhaft ist es zudem, wenn ein Imprägniermittel verwendet wird, bei dem der Anteil des Lösungsmittels oder Lösungsmittelgemisches in dem Imprägniermittel 25 bis 99 Gew.-% beträgt.

Ferner wird durch die Erfindung ein Formteil bereitgestellt, der in einem 3D-Druckverfahren, insbesondere in einem pulverbasierten Fertigungs- bzw. Druckverfahren hergestellt worden ist und an dessen Oberfläche zumindest teilweise ein Imprägniermittel aufgebracht ist, wobei das Imprägniermittel
- 25 bis 99 Gew.-% eines Lösungsmittels oder Lösungsmittelgemisches, wobei das Lösungsmittel oder das Lösungsmittelgemisch ausgewählt ist aus der Gruppe, umfassend Butanol, Butylacetat, Dichlormethan, Methanol, Ester, Vinylchlorid, Toluol, und Kombinationen hiervon, und
- auf 100 Gew.-% ergänzte Anteile eines in dem Lösungsmittel oder Lösungsmittelgemisch auflösbaren Kunststoffes oder Kunststoffgemisches, wobei der Kunststoff oder das Kunststoffgemisch ausgewählt ist aus der Gruppe, umfassend Polyamid, synthetische oder synthetisch hergestellte Harze, Polystyrol, Polymethylmethacrylat, Polycarbonat, Polyethylenterephthalat, Acrylnitril-Butadien-Styrol, und Kombinationen hiervon,
umfasst, jeweils bezogen auf die Gesamtzusammensetzung des Imprägniermittels.

Das Imprägniermittels kann hierbei 0,05 bis 15 Gew.-% eines Zusatzstoffes, vorzugsweise ausgewählt aus der Gruppe, umfassend Duftstoff, Farbstoff, Polytetrafluorethylen, und Kombinationen hiervon, umfassen.

Das Formteil kann ein Material ausgewählt aus der Gruppe, umfassend Polyamid, insbesondere Polyamid 11 und Polyamid 12, thermoplastisches Polyurethan, aluminiumgefülltes Polyamid, insbesondere aluminiumgefülltes Polyamid 12, glasgefülltes Polyamid, carbonverstärktes Polyamid, Sand, Gips, Metall, Verbundwerkstoff, und Kombinationen hiervon, aufweisen.

Das Formteil kann mit einem pulverbasierten Druckverfahren, insbesondere Selective Lasersintering (SLS), Selective Heat Sintering, oder Inkjet 3D-Printing hergestellt werden.

Das Formteil kann beispielsweise Rahmen für Brillen oder Brillengestelle, Schutzhüllen, beispielsweise für Mobilgeräte, oder sonstige Alltagsgegenstände, die in einem 3D-Druckverfahren hergestellt werden können, umfassen.

Das erfindungsgemäße Verfahren zum Imprägnieren von in einem 3D-Druckverfahren hergestellten Formteilen hat den Vorteil, dass das Imprägniermittel auch in kleinste Poren des Formteils eindringen kann, sodass verhindert wird, dass Wasser, Öle, Luft, Gase oder sonstige Fremdkörper in die Oberfläche des Formteils eindringen können. Zudem wird einem vorzeitigen Verschleiß der Oberfläche des Formteils entgegengewirkt.

Ferner wird durch das erfindungsgemäße Imprägnieren eine besonders glatte Oberfläche des Formteils erreicht, was sich insbesondere auf die Haptik des Formteils positiv auswirkt.

Ein weiterer Vorteil des erfindungsgemäßen Imprägnierverfahrens liegt darin, dass auch Formteile imprägniert werden können, die aus einem Material hergestellt werden, das besonders zur Aufnahme von Feuchtigkeit oder Flüssigkeiten neigt. So können mit dem erfindungsgemäßen Imprägnierverfahren Formteile wasserdicht versiegelt werden, die beispielsweise aus Sand oder Gips hergestellt sind.

### Kurzbeschreibung der Figuren

Weitere Einzelheiten und Merkmale der Erfindung ergeben sich aus der nachfolgenden Beschreibung in Verbindung mit der Zeichnung. Es zeigt:

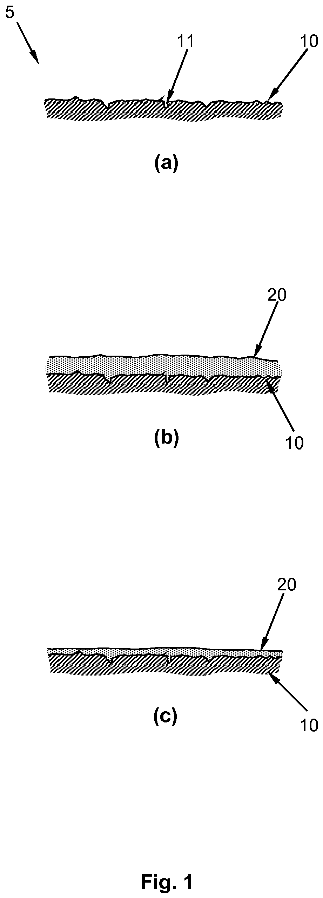

Fig. 1 eine vergrößerte Darstellung eines Ausschnittes einer Oberfläche eines in einem 3D-Druckverfahren hergestellten Formteils, die nach dem erfindungsgemäßen Verfahren mit einem Imprägniermittel imprägniert wird.

### Detaillierte Beschreibung der Erfindung

Fig. 1 zeigt in Abbildung (a) einen vergrößerten Ausschnitt einer Oberfläche 10 eines in einem 3D-Druckverfahren hergestellten Formteils 5. Zur Herstellung des Formteils ist ein pulverbasiertes Fertigungs- bzw. Druckverfahren verwendet worden. Die Oberfläche 10 des Formteils weist fertigungsbedingte Unebenheiten, insbesondere Poren 11 auf, die ein Anhaften von Schmutz bzw. Verunreinigungen an der Oberfläche 10 des Formteils 5 begünstigen. Die raue bzw. poröse Oberfläche 10 des Formteils wirkt sich zudem negativ auf die Haptik des Formteils aus.

Erfindungsgemäß wird die Oberfläche 10 des Formteils veredelt, d.h. imprägniert bzw. versiegelt, um die Unebenheiten, insbesondere die Poren 11 zu beseitigen bzw. zu verschließen. Hierzu wird an der Oberfläche 10 des Formteils 5 ein Imprägniermittel 20 aufgebracht und anschließend getrocknet bzw. ausgehärtet. Das Aufbringen des Imprägniermittels 20 kann beispielsweise dadurch erfolgen, indem das Formteil in das flüssige Imprägniermittel getaucht wird. Je nach Beschaffenheit der Oberfläche 10 (z.B. Anzahl und Größe der Poren 11) wird das Formteil für eine Dauer zwischen 1 Minute und 120 Minuten in das Imprägniermittel getaucht. In der Regel ist es ausreichend, das Formteil für eine Dauer zwischen 5 Minuten und 60 Minuten in das Imprägniermittel zu tauchen.

Die Eintauchdauer kann aber auch deutlich geringer als 1 Minute sein, insbesondere auch deutlich geringer als 1 Sekunde. So können beispielsweise Formteile aus Gips oder Sand imprägniert werden, indem diese nur für einen Bruchteil von einer Sekunde in das Imprägniermittel getaucht werden. Dadurch wird beispielsweise vermieden, dass Sand-Formteile aufgeweicht werden oder dass Gips-Formteile ihre Farbe verlieren oder ausblassen. In diesem Fall kann das Formteil mehrmals für kurze oder sehr kurze Zeit in das Imprägniermittel getaucht werden, wobei zwischen den einzelnen Eintauchvorgängen das Formteil bzw. Imprägniermittel getrocknet oder angetrocknet wird.

Alternativ kann das Imprägniermittel auch auf die Oberfläche 10 des Formteils 5 aufgespritzt, aufgesprüht oder aufgepinselt werden.

Die Abbildung (b) zeigt die Oberfläche 10 des Formteils, auf der das Imprägniermittel 20 aufgebracht und noch nicht ausgetrocknet bzw. ausgehärtet ist. Deutlich erkennbar ist hierbei, dass die Poren 11 der Oberfläche 10 des Formteils mit dem Imprägniermittel 20 verschlossen werden bzw. dass das Imprägniermittel 20 in die Poren 11 eindringt. Des Weiteren ist erkennbar, dass das Imprägniermittel 20 bereits direkt nach dem Aufbringen auf die Oberfläche des Formteils (d.h. im noch feuchten Zustand) eine wesentlich glattere Oberfläche aufweist als die darunter liegende Oberfläche 10 des Formteils.

Um eine noch glattere bzw. gleichmäßigere Oberfläche des Imprägniermittels 20 zu erhalten, wird nach dem Aufbringen des Imprägniermittels und vor dem Trocknen des Imprägniermittels die mit dem Imprägniermittel versehene Oberfläche aufbereitet. Das kann beispielsweise mit Hilfe einer Schleudervorrichtung geschehen. Durch das Schleudern des Formteils wirkt auf das an der Oberfläche aufgebrachte Imprägniermittel 20 eine Zentrifugalkraft, die einerseits eine gleichmäßige Verteilung des Imprägniermittels 20 an der Oberfläche 10 und andererseits ein Entfernen von überschüssigem Imprägniermittel von der Oberfläche 10 bewirkt. Vorzugsweise wird das Schleudern durchgeführt, solange das Imprägniermittel noch nicht ausgehärtet bzw. getrocknet wird. Besonders vorteilhaft ist es, wenn das Formteil unmittelbar nach dem Aufbringen des Imprägniermittels, also noch vor der Beginn der Trocknungsphase, geschleudert wird.

Für das Schleudern des Formteils können je nach Größe und Anzahl der zu schleudernden Formteile unterschiedliche Schleudervorrichtungen, beispielsweise industrielle Zentrifugen oder Schleudervorrichtungen nach Art einer Salatschleuder bzw. Honigschleuder verwendet werden.

Alternativ zum Schleudern der mit dem Imprägniermittel versehenen Formteile kann die Oberfläche der Formteile auch mit Druckluft beaufschlagt werden, was ebenfalls zu einer Verteilung des auf die Oberfläche aufgebrachten Imprägniermittels bzw. zu einem Entfernen von überschüssigem Imprägniermittel führt.

Das Schleudern des Formteils mit der Schleudervorrichtung kann für eine Dauer zwischen 2 Sekunden und 600 Sekunden durchgeführt werden. Es hat sich gezeigt, dass ein Schleudern zwischen 10 und 120 Sekunden in der Regel ausreichend ist. Die Dauer des Schleudervorganges wird vorzugsweise in Abhängigkeit des Anteils des Kunststoffes bzw. Kunststoffgemisches in dem Imprägniermittel gewählt. Bei einem höheren Kunststoffanteil in dem Imprägniermittel weist das Imprägniermittel eine höhere Viskosität auf als bei einem geringeren Anteil von Kunststoff in dem Imprägniermittel. Bei einer höheren Viskosität sollte demnach eine höhere Schleuderdauer gewählt werden, während bei einer geringeren Viskosität die Schleuderdauer entsprechend reduziert werden kann. Ebenfalls kann eine höhere Schleuderdauer gewählt werden, wenn möglichst viel Imprägniermittel von der Oberfläche weggeschleudert werden soll, um eine möglichst dünne Imprägnierschicht zu erhalten.

In Abbildung (c) ist die Oberfläche des Formteils mit einem daran aufgebrachten Imprägniermittel nach einem Schleudervorgang gezeigt. Erkennbar ist hierbei die deutlich reduzierte Stärke bzw. Dicke des Imprägniermittels 20 gegenüber der in Abbildung (b) gezeigten Imprägnierschicht 20 vor dem Schleudervorgang. Ebenfalls erkennbar ist in Abbildung (c) die deutlich glattere Oberfläche der Imprägnierschicht 20 gegenüber der Oberfläche des Imprägniermittels 20 in Abbildung (b), die von dem Schleudervorgang herrührt. Die wesentlich geringere Stärke bzw. Dicke der Imprägnierschicht 20 nach dem Schleudervorgang hat zudem den Vorteil, dass einerseits die Dauer für das Trocknen bzw. Aushärten der Imprägnierschicht erheblich verkürzt werden kann. Andererseits wird ein wesentlich gleichmäßigeres Trocknen der Imprägnierschicht 20 ermöglicht, wodurch eine ungewollte Rissbildung verhindert wird, die durch ein ungleichmäßiges Trocknen der Imprägnierschicht 20 begünstigt würde.

Nach dem Aufbringen des Imprägniermittels und nach dem Schleudern des Kunststoffgegenstandes wird die imprägnierte Oberfläche getrocknet, um den in dem Lösungsmittel des Imprägniermittels aufgelösten Kunststoff auszuhärten. Der Trocknungsvorgang kann beschleunigt werden, indem die imprägnierte Oberfläche des Formteils erhitzt bzw. erwärmt wird. Das kann beispielsweise dadurch geschehen, indem die Formteile in einen Trocknungsofen gegeben werden oder indem die zu trocknende Oberfläche mit erwärmter bzw. erhitzter Luft beaufschlagt wird.

Das Aufbringen des Imprägniermittels 20 an die Oberfläche 10 des Formteils 5 kann auch in einem Vakuum-Überdruck-Verfahren erfolgen. Hierbei wird das zu imprägnierende Formteil in ein vakuum- und druckdichtes Behältnis eingebracht. In dem Behältnis wird zunächst ein Unterdruck bzw. Vakuum erzeugt, sodass sich in den Poren 11 keine Luft mehr befindet. Anschließend wird bei Unterdruck bzw. bei Vakuum das Imprägniermittel in das Behältnis eingebracht, sodass das Formteil bzw. die zu imprägnierende Oberfläche des Formteils vollständig in dem Imprägniermittel eingetaucht ist. Das Behältnis wird sodann mit einem Überdruck beaufschlagt, sodass das Imprägniermittel in die Poren der Oberfläche 10 des Formteils hineingepresst wird. Durch das vorherige Bilden eines Vakuums bzw. Unterdruckes in dem Behältnis wird gewährleistet, dass sich in den Poren 11 keine Lufteinschlüsse bilden können.

In einer Abwandlung des Verfahrens kann auf die Herstellung eines Unterdruckes bzw. Vakuums auch verzichtet werden und lediglich nach dem Einbringen des Imprägniermittels in das Behältnis dieses mit einem Überdruck beaufschlagt werden.

Nach dem Trocknen der Oberfläche bzw. nach dem Aushärten des Imprägniermittels kann die Oberfläche des Formteils zusätzlich poliert werden, um beispielsweise der Oberfläche einen besonderen Glanz zu verleihen. Zudem kann durch das Polieren eine noch glattere Oberfläche erreicht werden, sodass das Formteil noch hochwertiger wirkt und zudem eine noch angenehmere bzw. vorteilhaftere Haptik aufweist.

Das Polieren der Oberfläche des Formteils kann beispielsweise unter Zuhilfenahme keramischer Polierelemente erfolgen, wobei das Formteil in eine Poliereinrichtung, beispielsweise Poliertrommel zusammen mit den Polierelementen gegeben werden kann. Je nach gewünschtem Ergebnis kann der Poliervorgang zwischen 1 Minute und mehreren Tagen betragen. Versuche haben gezeigt, dass bereits bei einer Polierdauer von etwa 4 Stunden ein optimales Ergebnis erreicht werden kann. Zusätzlich kann die Oberfläche 10 des zu imprägnierenden Formteils vor dem Imprägnieren geschliffen bzw. geglättet werden, um beispielsweise überstehende Grate zu beseitigen.

Das Imprägniermittel weist 25 bis 95 Gew.-% eines Lösungsmittels oder Lösungsmittelgemisches und auf 100 Gew.-% ergänzte Anteile eines in dem Lösungsmittel oder Lösungsmittelgemisch auflösbaren Kunststoff oder Kunststoffgemisches auf, jeweils bezogen auf die Gesamtzusammensetzung des Imprägniermittels. Versuche haben gezeigt, dass sich Acrylat und Polyamid sowie Kombinationen hiervon besonders gut als Kunststoff oder Kunststoffgemisch für das Imprägniermittel eignen. Ebenfalls haben Versuche gezeigt, dass sich Aceton, Butanol, Butylacetat oder Kombinationen hiervon besonders gut als Lösungsmittel oder Lösungsmittelgemisch für das Imprägniermittel eignen. Es kann aber auch Lösungsmittel- bzw. Lösungsmittelgemisch-Anteil in dem Imprägniermittel von bis zu 99% vorgesehen sein.

Versuche haben gezeigt, dass 0,05 bis 15 Gew.-% eines Zusatzstoffes dem Imprägniermittel zugegeben werden können, ohne die Imprägniereigenschaften des Imprägniermittels negativ zu beeinflussen. So können beispielsweise Duftstoffe zugegeben werden, um den lösungsmitteltypischen Geruch zu überdecken. Versuche haben gezeigt, dass auch Farbstoffe oder Polytetrafluorethylen dem Imprägniermittel als Zusatzstoff zugegeben werden können. Durch Zugabe von Farbstoffen kann der zu imprägnierenden Oberfläche ein bestimmter Farbton verliehen werden. Durch die Zugabe von Polytetrafluorethylen kann die imprägnierte Oberfläche mit einer verbesserten Antihaft-Eigenschaft ausgestattet werden, um ein Anhaften von Flüssigkeiten oder Schmutz an der Oberfläche des Formteils noch besser zu vermeiden.

Das erfindungsgemäße Verfahren zum Imprägnieren von in einem 3D-Druckverfahren hergestellten Formteilen lässt sich insbesondere dann vorteilhaft anwenden, wenn die Formteile aus einem Material ausgewählt aus der Gruppe umfassend Polyamid, insbesondere Polyamid 11 und Polyamid 12, thermoplastisches Polyurethan, aluminiumgefülltes Polyamid, insbesondere aluminiumgefülltes Polyamid 12, glasgefülltes Polyamid, carbonverstärktes Polyamid, Sand, Gips, Metall, Verbundwerkstoff, und Kombinationen hiervon hergestellt werden. Hierfür können pulverförmige oder granulatförmige Materialien zum Drucken bzw. Herstellen der Formteile verwendet werden, wobei als 3D-Druckverfahren besonders vorteilhaft pulverbasierte Druckverfahren, insbesondere Selective Lasersintering (SLS), Selective Heat Sintering und Inkjet 3D-Printing verwendet werden können.

Je nach verwendetem Material bzw. Materialgemisch zum Herstellen der Formteile und je nach verwendetem 3D-Druckverfahren kann das Mischungsverhältnis zwischen Lösungsmittel und Kunststoff in dem Imprägniermittel entsprechend angepasst werden. So haben Versuche gezeigt, dass für Gegenstände bzw. Formteile, die aus Sand oder Gips in einem pulverbasierten 3D-Druckverfahren hergestellt werden, das Imprägniermittel eine höhere Viskosität aufweisen sollte, als für Kunststoffgegenstände, die beispielsweise aus einem Polyamid in einem 3D-Druckvefahren hergestellt wurden. Durch Erhöhen des Anteils des Kunststoffes bzw. Kunststoffgemisches in dem Imprägniermittel wird gleichzeitig die Viskosität des Imprägniermittels erhöht.

Für in einem 3D-Druckverfahren hergestellte Gegenstände aus Sand und/oder Gips kann beispielsweise ein Imprägniermittel verwendet werden, das zwischen 40% und 75% eines Kunststoffes bzw. Kunststoffgemisches aufweist. In einem Versuch ist ein Formteil imprägniert worden, das in einem pulverbasierten 3D-Druckverfahren aus Sand hergestellt wurde, wobei das verwendete Imprägniermittel 49% Kunststoff enthalten hat. Mit dieser Zusammensetzung des Imprägniermittels wurde zum Einen gewährleistet, dass das Formteil aus Sand beim Imprägnieren nicht beschädigt wurde, andererseits war die Viskosität des Imprägniermittels gering genug, um ein gleichmäßiges, insbesondere gleichmäßig dickes Aufbringen des Imprägniermittels an der Oberfläche des Formteils aus Sand zu gewährleisten. Nach dem Aufbringen des Imprägniermittels auf das Formteil aus Sand und nach dem Austrocknen bzw. Aushärten des Imprägniermittels war die Oberfläche des Formteils aus Sand vollständig versiegelt, insbesondere wasserdicht und wasserabweisend, sodass das Formteil aus Sand auch vor Witterungseinflüssen geschützt ist.

In einem Versuch wurden Kunststoffgegenstände, die aus einem Polyamid hergestellt wurden, mit einem Imprägniermittel imprägniert. Hierbei hat sich gezeigt, dass bereits ein Anteil von etwa 10% des Kunststoffes bzw. Kunststoffgemisches in dem Imprägniermittel für eine ausreichende Versiegelung der Oberfläche des Kunststoffgegenstandes ausreichend ist.

Bei einem geringen Anteil des Kunststoffes bzw. Kunststoffgemisches in dem Imprägniermittel, d.h. bei einer geringen Viskosität des Imprägniermittels, kann dieses auch in einem Spritz- bzw. Sprühverfahren auf die zu imprägnierende Oberfläche des Formteils aufgebracht werden.

Je geringer der Kunststoffanteil in dem Imprägniermittel ist, umso geringer ist auch die Viskosität des Imprägniermittels, was dann von Vorteil ist, wenn besonders dünne Imprägnierschichten auf der Oberfläche der Formteile hergestellt werden sollen. Denn dann kann in einem Schleudervorgang das an der Oberfläche des Formteils aufgebrachte Imprägniermittel besonders einfach gleichmäßig verteilt werden und überschüssiges Imprägniermittel besonders gut entfernt werden.

Wird die Viskosität des Imprägniermittels höher eingestellt, muss entweder die Dauer des Schleudervorgangs erhöht werden oder mit einer dickeren Imprägnierschicht gerechnet werden. Es ist anzumerken, dass dickere Imprägnierschichten durchaus gewünscht sein können, etwa auf Formteilen, die besonderen Einflüssen, etwa Witterungseinflüssen ausgesetzt sind.

Die Erfindung wird durch die folgenden Beispiele näher veranschaulicht.

### Beispiel 1:

Die Kunststoffformteile bzw. die Kunststoffgegenstände werden mit dem pulverförmigen Ausgangsmaterial Polymer PA12 in einem selektiven Lasersinterverfahren hergestellt. Dieses und die nachfolgenden Beispiele gelten entsprechend auch für Formteile, die etwa aus Sand oder Gips hergestellt werden.

Die Kunststoffgegenstände wurden nach der Entnahme aus der 3D-Druckvorrichtung von dem überschüssigen Polyamid-Pulver befreit und anschließend in Rundvibratoren unter Verwendung von verschiedenen Schleifmitteln geschliffen.

Anschließend wurden die Kunststoffgegenstände mit einem Färbegemisch eingefärbt.

Die Kunststoffgegenstände wurden nach etwa 15 Minuten aus dem Färbegemisch herausgenommen. Lose Farbpartikel wurden von der Oberfläche des Formteils entfernt. Anschließend wurden die Kunststoffgegenstände getrocknet.

Im Anschluss an den Färbevorgang wurden die getrockneten Kunststoffgegenstände imprägniert, indem die Kunststoffgegenstände für etwa 15 Minuten in ein flüssiges Imprägniermittel gelegt bzw. eingetaucht wurden.

Für das Imprägniermittel wurden 90% eines Lösungsmittelgemisches aus Butanol und Butylacetat und als Kunststoff 10% Acrylat verwendet, wobei das Acrylat in dem Lösungsmittelgemisch aufgelöst ist. Nach etwa 15 Minuten wurden die Kunststoffgegenstände aus dem Imprägniermittel herausgenommen und für 10 Sekunden geschleudert und anschließend getrocknet. Je nach Oberflächenbeschaffenheit des Kunststoffgegenstandes kann auch ein Imprägniermittel mit 99% eines Lösungsmittelgemisches und 1% eines in dem Lösungsmittel auflösbaren Kunststoffes verwendet werden.

### Beispiel 2:

Die Kunststoffgegenstände wurden gemäß Beispiel 1 hergestellt und eingefärbt. Im Anschluss daran wurden die Kunststoffgegenstände ebenfalls imprägniert, indem diese für etwa 15 Minuten in ein Imprägniermittel eingetaucht wurden.

Im Unterschied zum Beispiel 1 ist ein Imprägniermittel verwendet worden, das zu 75% aus einem Lösungsmittelgemisch aus Butanol und Butylacetat und zu 25% aus Acrylat besteht. Nach etwa 15 Minuten sind die Kunststoffgegenstände für etwa 10 Sekunden geschleudert und anschließend getrocknet worden.

### Beispiel 3:

Die Kunststoffgegenstände sind gemäß Beispiel 1 hergestellt und eingefärbt worden. Anschließend wurden die Kunststoffgegenstände für etwa 15 Minuten in ein Imprägniermittel getaucht, wobei das Imprägniermittel dieselbe Zusammensetzung aufgewiesen hat, wie das Imprägniermittel gemäß Beispiel 2. Nach etwa 15 Minuten wurde der Kunststoffgegenstand aus dem Imprägniermittel entnommen und für etwa 30 Sekunden geschleudert und anschließend getrocknet.

Die Verfahrensparameter und die daraus resultierenden Ergebnisse der durchgeführten Versuche gemäß Beispiel 1 bis Beispiel 3 sind in nachfolgender Tabelle wiedergegeben.

| | Beispiel 1 | Beispiel 2 | Beispiel 3 |
|---|---|---|---|
| Lösungsmittelgemisch (Butanol + Butylacetat) | 90% | 75% | 75% |
| Kunststoff (Acrylat) | 10% | 25% | 25% |
| Imprägnierdauer | 15 Min. | 15 Min. | 15 Min. |
| Schleuderdauer | 10 Sek. | 10 Sek. | 30 Sek. |
| Durchschnittliche Dicke der Imprägnierschicht | 0,15 mm | 0,25 mm | 0,17 mm |

Wie aus vorstehender Tabelle ersichtlich, führt ein erhöhter Kunststoffanteil in dem Beispiel 2 (25%) gegenüber Beispiel 1 (10%) bei gleichbleibender Imprägnierdauer und gleichbleibender Schleuderdauer zu einer nahezu doppelt so dicken durchschnittlichen Dicke der Imprägnierschicht, was darauf zurückzuführen ist, dass die Viskosität des Imprägniermittels in dem Beispiel 2 deutlich höher ist als die Viskosität des Imprägniermittels in dem Beispiel 1, sodass bei gleichbleibender Schleuderdauer das aufgebrachte Imprägniermittel zwar gleichmäßig dick an der Oberfläche des Kunststoffgegenstandes verteilt wird, allerdings wesentlich weniger Imprägniermittel durch den Schleudervorgang von der Oberfläche weggeschleudert wird. Wird die Schleuderdauer hingegen erhöht, wie in Beispiel 3 geschehen, kann zusätzliches Imprägniermittel weggeschleudert werden, sodass die durchschnittliche Dicke der Imprägnierschicht abnimmt und nahezu die gleiche durchschnittliche Dicke erreicht wie gemäß Beispiel 1.

Das Imprägnieren bzw. Versiegeln der Oberfläche von in einem 3D-Druckverfahren hergestellten Formteilen nach dem erfindungsgemäßen Imprägnierverfahren und mit dem Imprägniermittel hat den Vorteil, dass sich nicht nur eine Versiegelungsschicht über die Oberfläche des Formteils legt, sondern dass das Imprägniermittel auch in kleinste Poren des Formteils eindringt, sodass einerseits das Imprägniermittel bzw. der Kunststoffanteil des Imprägniermittels eine feste Verbindung mit dem Formteil eingeht, weil der Kunststoffanteil des Imprägniermittels im ausgehärteten Zustand in den Poren der Oberfläche verankert wird.

Die Zusammensetzung des Imprägniermittels führt zudem zu einer verbesserten Kapillaraktivität des Imprägniermittels, sodass dieses selbst in kleinste Poren tief eindringen kann.

Zudem wird verhindert, dass Wasser, Öle, Luft, Gase oder sonstige Fremdkörper in die Oberfläche des Formteils eindringen können bzw. an der Oberfläche des Formteils haften bleiben, sodass ein vorteilhaftes ästhetisches Erscheinungsbild des Formteils auch über lange Zeit erhalten bleibt. Zudem wird durch das Imprägnieren bzw. Versiegeln der Oberfläche einem vorzeitigen Verschleiß der Oberfläche des Formteils entgegengewirkt. Ein weiterer wesentlicher Vorteil liegt darin, dass die Farbintensität und/oder Leuchtkraft von gefärbten Formteilen erhöht werden kann.

Vorstehend ist die Erfindung anhand eines Imprägniermittels beschrieben worden, bei dem der Kunststoffanteil Acrylat, Polyamid oder Kombinationen hiervon aufweist. Selbstverständlich können auch andere Kunststoffe in dem Imprägniermittel verwendet werden, die geeignet sind, in dem verwendeten Lösungsmittel bzw. Lösungsmittelgemisch aufgelöst zu werden. Besonders vorteilhaft ist es Kunststoffe für das Imprägniermittel zu verwenden die transparent sind oder die nach dem Austrocknen bzw. Aushärten transparent sind.

## Patentansprüche

1. Verfahren zum Imprägnieren von in einem 3D-Druckverfahren, insbesondere von in einem pulverbasierten Fertigungs- bzw. Druckverfahren hergestellten Formteilen mit einem flüssigen und/oder spritzfähigen Imprägniermittel, wobei das Imprägniermittel
- 25 bis 99 Gew.-% eines Lösungsmittels oder Lösungsmittelgemisches, wobei das Lösungsmittel oder das Lösungsmittelgemisch ausgewählt ist aus der Gruppe, umfassend Butanol, Butylacetat, Dichlormethan, Methanol, Ester, Vinylchlorid, Toluol, und Kombinationen hiervon und
- auf 100 Gew.-% ergänzte Anteile eines in dem Lösungsmittel oder Lösungsmittelgemisch auflösbaren Kunststoffes oder Kunststoffgemisches, wobei der Kunststoff oder das Kunststoffgemisch ausgewählt ist aus der Gruppe, umfassend Polyamid, synthetische oder synthetisch hergestellte Harze, Polystyrol, Polymethylmethacrylat, Polycarbonat, Polyethylenterephthalat, Acrylnitril-Butadien-Styrol, und Kombinationen hiervon,
aufweist, jeweils bezogen auf die Gesamtzusammensetzung des Imprägniermittels, und wobei
- das Imprägniermittel auf die zu imprägnierende Oberfläche des Formteils aufgebracht wird und
- nach dem Aufbringen des Imprägniermittels die imprägnierte Oberfläche getrocknet wird.

2. Verfahren nach dem vorhergehenden Anspruch, wobei das Imprägniermittel 0,05 bis 15 Gew.-% eines Zusatzstoffes, vorzugsweise ausgewählt aus der Gruppe, umfassend Duftstoff, Farbstoff, Polytetrafluorethylen, und Kombinationen hiervon, aufweist.

3. Verfahren nach einem der vorhergehenden Ansprüche, wobei zum Aufbringen des Imprägniermittels auf die zu imprägnierende Oberfläche des Formteils
- das Formteil für eine Dauer zwischen einigen Millisekunden und 120 Minuten, vorzugsweise zwischen 5 Minuten und 60 Minuten, besonders bevorzugt zwischen 10 Minuten und 30 Minuten in das Imprägniermittel getaucht wird, oder
- das Imprägniermittel auf die zu imprägnierende Oberfläche des Formteils aufgesprüht oder aufgepinselt wird,
wobei das Aufbringen des Imprägniermittels auf die zu imprägnierende Oberfläche des Formteils bei einer Temperatur des Imprägniermittels zwischen 5°C und 50°C, vorzugsweise zwischen 15°C und 30°C, besonders bevorzugt zwischen 20°C und 25°C erfolgt.

4. Verfahren nach einem der vorhergehenden Ansprüche, wobei nach dem Aufbringen des Imprägniermittels und vor dem Trocknen der imprägnierten Oberfläche die mit dem Imprägniermittel versehene Oberfläche aufbereitet wird, um eine weitgehend gleichmäßige Verteilung, insbesondere eine gleichmäßige Stärke und/oder Dicke des Imprägniermittels an der Oberfläche zu erhalten, wobei das Aufbereiten der mit dem Imprägniermittel versehenen Oberfläche des Formteils vorzugsweise
- mit einer Schleudervorrichtung, die das Formteil aufnimmt und die angepasst ist, dass im Betrieb eine Zentrifugalkraft auf das an der Oberfläche aufgebrachte Imprägniermittel wirkt, oder
- durch Beaufschlagen der mit dem Imprägniermittel versehenen Oberfläche mit Druckluft
durchgeführt wird.

5. Verfahren nach einem der vorhergehenden Ansprüche, wobei zum Trocknen der imprägnierten Oberfläche die imprägnierte Oberfläche oder das Formteil erhitzt oder erwärmt wird, um ein Aushärten des auf die Oberfläche des Formteils aufgebrachten Imprägniermittels zu beschleunigen.

6. Verfahren nach einem der vorhergehenden Ansprüche, wobei das Aufbringen des Imprägniermittels auf die Oberfläche des Formteils bei Überdruck erfolgt, wobei das Formteil und das Imprägniermittel in ein druckdichtes Behältnis eingebracht werden und das Behältnis mit Überdruck beaufschlagt wird.

7. Verfahren nach dem vorhergehenden Anspruch, wobei vor dem Einbringen des Imprägniermittels in das Behältnis das Behältnis mit dem darin angeordneten Formteil mit Unterdruck (Vakuum) beaufschlagt wird.

8. Verwendung eines Imprägniermittels zum Imprägnieren von in einem 3D-Druckverfahren, insbesondere von in einem pulverbasierten Fertigungs- bzw. Druckverfahren hergestellten Formteilen, wobei das Imprägniermittel
- 25 bis 99 Gew.-% eines Lösungsmittels oder Lösungsmittelgemisches, wobei das Lösungsmittel oder das Lösungsmittelgemisch ausgewählt ist aus der Gruppe, umfassend Butanol, Butylacetat, Dichlormethan, Methanol, Ester, Vinylchlorid, Toluol, und Kombinationen hiervon, und
- auf 100 Gew.-% ergänzte Anteile eines in dem Lösungsmittel oder Lösungsmittelgemisch auflösbaren Kunststoffes oder Kunststoffgemisches, wobei der Kunststoff oder das Kunststoffgemisch ausgewählt ist aus der Gruppe, umfassend Polyamid, synthetische oder synthetisch hergestellte Harze, Polystyrol, Polymethylmethacrylat, Polycarbonat, Polyethylenterephthalat, Acrylnitril-Butadien-Styrol, und Kombinationen hiervon,
umfasst, jeweils bezogen auf die Gesamtzusammensetzung des Imprägniermittels.

9. Verwendung nach dem vorhergehenden Anspruch, wobei das Imprägniermittel 0,05 bis 15 Gew.-% eines Zusatzstoffes, vorzugsweise ausgewählt aus der Gruppe, umfassend Duftstoff, Farbstoff, Polytetrafluorethylen, und Kombinationen hiervon, umfasst.

10. Verwendung nach einem der beiden vorhergehenden Ansprüche, wobei das Imprägniermittel angepasst ist in einem Tauchverfahren oder in einem Spritzverfahren oder mit einem Pinsel auf die Oberfläche eines Formteils aufgebracht zu werden.

11. Verwendung nach dem einem der vorhergehenden Ansprüche 8 bis 10, wobei
- das Formteil für eine Dauer zwischen wenigen Millisekunden und 120 Minuten, vorzugsweise zwischen 5 Minuten und 60 Minuten, besonders bevorzugt zwischen 10 Minuten und 30 Minuten in das Imprägniermittel getaucht wird, oder
- das Imprägniermittel auf die zu imprägnierende Oberfläche des Formteils aufgesprüht oder aufgepinselt wird.

12. Verwendung nach einem der vorhergehenden Ansprüche 8 bis 11, wobei das Imprägniermittel bei einer Temperatur des Imprägniermittels zwischen 5°C und 50°C, vorzugsweise zwischen 15°C und 30°C, besonders bevorzugt zwischen 20°C und 25°C auf die zu imprägnierende Oberfläche des Formteils aufgebracht wird.

13. Verwendung nach einem der vorhergehenden Ansprüche 8 bis 12, wobei ein Trocknungsschritt vorgesehen ist, wobei zum Trocknen der imprägnierten Oberfläche die imprägnierte Oberfläche oder das Formteil erhitzt oder erwärmt wird, um ein Aushärten des auf die Oberfläche des Formteils aufgebrachten Imprägniermittels zu beschleunigen.

14. Formteil, das in einem 3D-Druckverfahren, insbesondere in einem pulverbasierten Fertigungs- bzw. Druckverfahren hergestellt worden ist und an dessen Oberfläche zumindest teilweise ein Imprägniermittel aufgebracht ist, wobei das Imprägniermittel
- 25 bis 99 Gew.-% eines Lösungsmittels oder Lösungsmittelgemisches, wobei das Lösungsmittel oder das Lösungsmittelgemisch ausgewählt ist aus der Gruppe, umfassend Butanol, Butylacetat, Dichlormethan, Methanol, Ester, Vinylchlorid, Toluol, und Kombinationen hiervon, und
- auf 100 Gew.-% ergänzte Anteile eines in dem Lösungsmittel oder Lösungsmittelgemisch auflösbaren Kunststoffes oder Kunststoffgemisches, wobei der Kunststoff oder das Kunststoffgemisch ausgewählt ist aus der Gruppe, umfassend Polyamid, synthetische oder synthetisch hergestellte Harze, Polystyrol, Polymethylmethacrylat, Polycarbonat, Polyethylenterephthalat, Acrylnitril-Butadien-Styrol, und Kombinationen hiervon,
umfasst, jeweils bezogen auf die Gesamtzusammensetzung des Imprägniermittels, und wobei das Formteil ein Material ausgewählt aus der Gruppe, umfassend Polyamid, insbesondere Polyamid 11 und Polyamid 12, thermoplastisches Polyurethan, aluminiumgefülltes Polyamid, insbesondere aluminiumgefülltes Polyamid 12, glasgefülltes Polyamid, carbonverstärktes Polyamid, Sand, Gips, Metall, Verbundwerkstoff, und Kombinationen hiervon, aufweist.

15. Formteil nach dem vorhergehenden Anspruch, wobei das Imprägniermittel 0,05 bis 15 Gew.-% eines Zusatzstoffes, vorzugsweise ausgewählt aus der Gruppe, umfassend Duftstoff, Farbstoff, Polytetrafluorethylen, und Kombinationen hiervon, umfasst.

## Claims

1. Method for impregnating molded parts produced in a 3D printing process, in particular molded parts produced in a powder-based manufacturing or printing process using a liquid impregnation agent and/or sprayable impregnation agent, wherein the impregnation agent has
- 25 to 99 wt.% of a solvent or solvent mixture, wherein the solvent or solvent mixture is selected from the group comprising butanol, butyl acetate, dichloromethane, methanol, ester, vinyl chloride, toluene, and combinations thereof, and
- fractions adding up to 100 wt.% of a plastics material or plastics material mixture that can be dissolved in the solvent or solvent mixture, wherein the plastics material or the plastics material mixture is selected from the group comprising polyamide, synthetic or synthetically produced resins, polystyrene, polymethyl methacrylate, polycarbonate, polyethylene terephthalate, acrylonitrile butadiene styrene, and combinations thereof, each based on the total composition of the impregnation agent, and wherein
- the impregnation agent is applied to the surface of the molded part to be impregnated and,
- after applying the impregnation agent, the impregnated surface is dried.

2. Method according to the preceding claim, wherein the impregnation agent has 0.05 to 15 wt.% of an additive, preferably selected from the group comprising fragrance, dye, polytetrafluoroethylene, and combinations thereof.

3. Method according to any of the preceding claims, wherein for applying the impregnation agent onto the surface of the molded part to be impregnated
- the molded part is immersed in the impregnation agent for a period of between several milliseconds and 120 minutes, preferably between 5 minutes and 60 minutes, particularly preferably between 10 minutes and 30 minutes, or
- the impregnation agent is sprayed or brushed onto the surface of the molded part to be impregnated, wherein applying the impregnation agent onto the surface of the molded part to be impregnated takes place at a temperature of the impregnation agent between 5°C and 50°C, preferably between 15°C and 30°C, particularly preferably between 20°C and 25°C.

4. Method according to any of the preceding claims, wherein, after applying the impregnation agent and before drying the impregnated surface, the surface provided with the impregnation agent is prepared in order to obtain a largely uniform distribution, in particular a uniform strength and/or thickness of the impregnation agent on the surface, wherein preparing the surface of the molded part provided with the impregnation agent is preferably carried out
- using a centrifugal device which receives the molded part and which is adapted so that, during operation, a centrifugal force acts on the impregnation agent applied to the surface, or
- by subjecting the surface provided with the impregnation agent to compressed air.

5. Method according to any of the preceding claims, wherein, for drying the impregnated surface, the impregnated surface or the molded part is heated or warmed up in order to accelerate curing of the impregnation agent applied to the surface of the molded part.

6. Method according to any of the preceding claims, wherein applying the impregnation agent onto the surface of the molded part takes place under excess pressure, wherein the molded part and the impregnation agent are introduced into a pressure-tight container and the container is subjected to excess pressure.

7. Method according to the preceding claim, wherein before the impregnation agent is introduced into the container, the container having the molded part arranged therein is subjected to negative pressure (vacuum).

8. Use of an impregnation agent for impregnating molded parts produced in a 3D printing process, in particular molded parts produced in a powder-based manufacturing or printing process, wherein the impregnation agent comprises
- 25 to 99 wt.% of a solvent or solvent mixture, wherein the solvent or solvent mixture is selected from the group comprising butanol, butyl acetate, dichloromethane, methanol, ester, vinyl chloride, toluene, and combinations thereof, and
- fractions adding up to 100 wt.% of a plastics material or plastics material mixture that can be dissolved in the solvent or solvent mixture, wherein the plastics material or the plastics material mixture is selected from the group comprising polyamide, synthetic or synthetically produced resins, polystyrene, polymethyl methacrylate, polycarbonate, polyethylene terephthalate, acrylonitrile butadiene styrene, and combinations thereof, each based on the total composition of the impregnation agent.

9. Use according to the preceding claim, wherein the impregnation agent comprises 0.05 to 15 wt.% of an additive, preferably selected from the group comprising fragrance, dye, polytetrafluoroethylene, and combinations thereof.

10. Use according to either of the two preceding claims, wherein the impregnation agent is adapted to be applied to the surface of a molded part in a dipping method or in a spraying method or using a brush.

11. Use according to any of the preceding claims 8 to 10, wherein
- the molded part is immersed in the impregnation agent for a period of between a few milliseconds and 120 minutes, preferably between 5 minutes and 60 minutes, particularly preferably between 10 minutes and 30 minutes, or
- the impregnation agent is sprayed or brushed onto the surface of the molded part to be impregnated.

12. Use according to any of the preceding claims 8 to 11, wherein the impregnation agent is applied at a temperature of the impregnation agent between 5°C and 50°C, preferably between 15°C and 30°C, particularly preferably between 20°C and 25°C, onto surface of the molded part to be impregnated.

13. Use according to any of the preceding claims 8 to 12, wherein a drying step is provided, wherein, for drying the impregnated surface, the impregnated surface or the molded part is heated or warmed up in order to accelerate curing of the impregnation agent applied to the surface of the molded part.

14. Molded part which has been produced in a 3D printing process, in particular in a powder-based manufacturing or printing process, and at the surface of which an impregnation agent is at least partially applied, wherein the impregnation agent comprises
- 25 to 99 wt.% of a solvent or solvent mixture, wherein the solvent or solvent mixture is selected from the group comprising butanol, butyl acetate, dichloromethane, methanol, ester, vinyl chloride, toluene, and combinations thereof, and
- fractions adding up to 100 wt.% of a plastics material or plastics material mixture that can be dissolved in the solvent or solvent mixture, wherein the plastics material or the plastics material mixture is selected from the group comprising polyamide, synthetic or synthetically produced resins, polystyrene, polymethyl methacrylate, polycarbonate, polyethylene terephthalate, acrylonitrile butadiene styrene, and combinations thereof, each based on the total composition of the impregnation agent, and wherein the molded part comprises a material selected from the group comprising polyamide, in particular polyamide 11 and polyamide 12, thermoplastic polyurethane, aluminum-filled polyamide, in particular aluminum-filled polyamide 12, glass-filled polyamide, carbon-reinforced polyamide, sand, gypsum, metal, composite material, and combinations thereof.

15. Molded part according to the preceding claim, wherein the impregnation agent comprises 0.05 to 15 wt.% of an additive, preferably selected from the group comprising fragrance, dye, polytetrafluoroethylene, and combinations thereof.

## Revendications

1. Procédé d'imprégnation de pièces moulées produites dans un procédé d'impression 3D, en particulier dans un procédé de fabrication ou d'impression à base de poudre, avec un agent d'imprégnation liquide et/ou pulvérisable, l'agent d'imprégnation présentant
- 25 à 99 % en poids d'un solvant ou mélange de solvants, le solvant ou le mélange de solvants étant choisi dans le groupe du butanol, de l'acétate de butyle, du dichlorométhane, du méthanol, de l'ester, du chlorure de vinyle, du toluène et leurs combinaisons et
- 100 % en poids de proportions complétées d'un plastique ou mélange plastique soluble dans le solvant ou mélange de solvants, le plastique ou le mélange plastique étant choisi dans le groupe du polyamide, des résines synthétiques ou produites de façon synthétique, du polystyrène, du polyméthacrylate de méthyle, du polycarbonate, du polyéthylènetéréphtalate, de l'acrylonitrile-butadiène-styrène et leurs combinaisons,
respectivement par rapport à la composition totale de l'agent d'imprégnation, et
- l'agent d'imprégnation étant appliqué sur la surface à imprégner de la pièce moulée et
- la surface imprégnée étant séchée après l'application de l'agent d'imprégnation.

2. Procédé selon la revendication précédente, dans lequel l'agent d'imprégnation présente 0,05 à 15 % en poids d'un additif, de préférence choisi dans le groupe comprenant du parfum, du colorant, du polytétrafluoroéthylène et leurs combinaisons.

3. Procédé selon l'une des revendications précédentes, dans lequel, pour appliquer l'agent d'imprégnation sur la surface à imprégner de la pièce moulée,
- la pièce moulée est immergée dans l'agent d'imprégnation pendant une durée comprise entre quelques millisecondes et 120 minutes, de préférence entre 5 minutes et 60 minutes, de manière particulièrement préférée entre 10 minutes et 30 minutes, ou
- l'agent d'imprégnation est pulvérisé ou brossé sur la surface à imprégner de la pièce moulée,
l'agent d'imprégnation étant appliqué sur la surface à imprégner de la pièce moulée à une température de l'agent d'imprégnation comprise entre 5 °C et 50 °C, de préférence entre 15 °C et 30 °C, de manière particulièrement préférée entre 20 °C et 25 °C.

4. Procédé selon l'une des revendications précédentes, dans lequel, après l'application de l'agent d'imprégnation et avant le séchage de la surface imprégnée, la surface pourvue de l'agent d'imprégnation est préparée pour obtenir une répartition largement uniforme, en particulier une résistance et/ou une épaisseur uniformes de l'agent d'imprégnation sur la surface, la préparation de la surface de la pièce moulée pourvue de l'agent d'imprégnation étant réalisée de préférence
- au moyen d'un dispositif centrifuge qui reçoit la pièce moulée et qui est adapté pour que, pendant le fonctionnement, une force centrifuge agisse sur l'agent d'imprégnation appliqué sur la surface, ou
- en appliquant de l'air comprimé à la surface pourvue de l'agent d'imprégnation.

5. Procédé selon l'une des revendications précédentes, dans lequel, pour sécher la surface imprégnée, la surface imprégnée ou la pièce moulée est chauffée ou réchauffée pour accélérer le durcissement de l'agent d'imprégnation appliqué sur la surface de la pièce moulée.

6. Procédé selon l'une des revendications précédentes, dans lequel l'application de l'agent d'imprégnation sur la surface de la pièce moulée est réalisée sous surpression, la pièce moulée et l'agent d'imprégnation étant introduits dans un récipient étanche à la pression et le récipient étant soumis à de la surpression.

7. Procédé selon la revendication précédente, dans lequel, avant l'introduction de l'agent d'imprégnation dans le récipient, le récipient et la pièce moulée disposée à l'intérieur sont soumis à une pression négative (vide).

8. Utilisation d'un agent d'imprégnation pour l'imprégnation de pièces moulées produites dans un procédé d'impression 3D, en particulier dans un procédé de fabrication ou d'impression à base de poudre, l'agent d'imprégnation comprenant
- 25 à 99 % en poids d'un solvant ou mélange de solvants, le solvant ou le mélange de solvants étant choisi dans le groupe du butanol, de l'acétate de butyle, du dichlorométhane, du méthanol, de l'ester, du chlorure de vinyle, du toluène et leurs combinaisons et
- 100 % en poids de proportions complétées d'un plastique ou mélange plastique soluble dans le solvant ou mélange de solvants, le plastique ou le mélange plastique étant choisi dans le groupe du polyamide, des résines synthétiques ou produites de façon synthétique, du polystyrène, du polyméthacrylate de méthyle, du polycarbonate, du polyéthylènetéréphtalate, de l'acrylonitrile-butadiène-styrène et leurs combinaisons,
respectivement par rapport à la composition totale de l'agent d'imprégnation.

9. Utilisation selon la revendication précédente, dans laquelle l'agent d'imprégnation comprend 0,05 à 15 % en poids d'un additif, de préférence choisi dans le groupe comprenant du parfum, du colorant, du polytétrafluoroéthylène et leurs combinaisons.

10. Utilisation selon l'une des deux revendications précédentes, dans laquelle l'agent d'imprégnation est adapté pour être appliqué sur la surface d'une pièce moulée dans un procédé de trempage ou un procédé de pulvérisation ou au moyen d'un pinceau.

11. Utilisation selon l'une quelconque des revendications 8 à 10 précédentes, dans laquelle
- la pièce moulée est immergée dans l'agent d'imprégnation pendant une durée comprise entre quelques millisecondes et 120 minutes, de préférence entre 5 minutes et 60 minutes, de manière particulièrement préférée entre 10 minutes et 30 minutes, ou
- l'agent d'imprégnation est pulvérisé ou brossé sur la surface à imprégner de la pièce moulée.

12. Utilisation selon l'une des revendications 8 à 11 précédentes, dans laquelle l'agent d'imprégnation est appliqué sur la surface à imprégner de la pièce moulée à une température de l'agent d'imprégnation comprise entre 5 °C et 50 °C, de préférence entre 15 °C et 30 °C, de manière particulièrement préférée entre 20 °C et 25 °C.

13. Utilisation selon l'une des revendications 8 à 12 précédentes, dans laquelle une étape de séchage est prévue, la surface imprégnée ou la pièce moulée étant chauffée ou réchauffée pour sécher la surface imprégnée afin d'accélérer le durcissement de l'agent d'imprégnation appliqué sur la surface de la pièce moulée.

14. Pièce moulée fabriquée dans un procédé d'impression 3D, en particulier dans un procédé de fabrication ou d'impression à base de poudre et sur la surface de laquelle un agent d'imprégnation est au moins partiellement appliqué, l'agent d'imprégnation comprenant
- 25 à 99 % en poids d'un solvant ou mélange de solvants, le solvant ou le mélange de solvants étant choisi dans le groupe du butanol, de l'acétate de butyle, du dichlorométhane, du méthanol, de l'ester, du chlorure de vinyle, du toluène et leurs combinaisons et
- 100 % en poids de proportions complétées d'un plastique ou mélange plastique soluble dans le solvant ou mélange de solvants, le plastique ou le mélange plastique étant choisi dans le groupe du polyamide, des résines synthétiques ou produites de façon synthétique, du polystyrène, du polyméthacrylate de méthyle, du polycarbonate, du polyéthylènetéréphtalate, de l'acrylonitrile-butadiène-styrène et leurs combinaisons,
respectivement par rapport à la composition totale de l'agent d'imprégnation, et la pièce moulée étant une matière choisie dans le groupe comprenant le polyamide, en particulier le polyamide 11 et le polyamide 12, le polyuréthane thermoplastique, le polyamide chargé d'aluminium, en particulier le polyamide 12 chargé d'aluminium, le polyamide chargé de verre, le polyamide renforcé de carbone, le sable, le plâtre, le métal, le matériau composite, et leurs combinaisons.

15. Pièce moulée selon la revendication précédente, dans laquelle l'agent d'imprégnation comprend 0,05 à 15 % en poids d'un additif, de préférence choisi dans le groupe comprenant du parfum, du colorant, du polytétrafluoroéthylène et leurs combinaisons.
